Europäisches Patentamt

European Patent Office

Office européen des brevets

(19)

(11) Publication number: **0 181 024 B1**

(12) **EUROPEAN PATENT SPECIFICATION**

(45) Date of publication of patent specification: **11.03.92**   (51) Int. Cl.⁵: **A23L 1/318**, A23L 1/315

(21) Application number: **85201719.3**

(22) Date of filing: **22.10.85**

(54) **Method for processing poultry.**

(30) Priority: **09.11.84 US 669854**
**22.03.85 US 714815**

(43) Date of publication of application:
**14.05.86 Bulletin 86/20**

(45) Publication of the grant of the patent:
**11.03.92 Bulletin 92/11**

(84) Designated Contracting States:
**DE FR GB IT SE**

(56) References cited:
**CA-A- 884 212**
**DE-A- 2 818 862**
**GB-A- 2 059 247**
**US-A- 3 928 634**
**US-A- 4 458 586**

**JOURNAL OF FOOD SCIENCE, vol. 47, 1982, pages 1016-1017,1019; T.C. CHEN: "Studies on the marinating of chicken parts for deep-fat frying"**

**PATENT ABSTRACTS OF JAPAN, vol. 7, no. 242 (C-192)[1387], 27th October 1983; & JP-A-58 129 942 (NITSUTOU SEIFUN K.K.) 03-08-1983**

(73) Proprietor: **HESTER INDUSTRIES, INC.**

**Moorefield Virginia 26836(US)**

(72) Inventor: **Williams, Charles Elwood**
**504 Clement Street**
**Moorefield West Virginia 26836(US)**

(74) Representative: **Petri, Stellan**
**c/o SAB NIFE AB Box 515**
**S-261 24 Landskrona(SE)**

EP 0 181 024 B1

## Description

## Technical Field

This invention relates to a commercial method of processing raw poultry parts, and more particularly it relates to flavoring and coating poultry parts to improve the flavor and appearance of the poultry.

## Background Art

In the commercial food industry providing preprocessed meats and poultry, it has long been the custom to cover the products with a breading. A significant part of the function of the breading is cosmetic, and in general the breading must be fried to produce a pleasing and appetizing golden brown color. It may not be incidental that the cost and weight of the breading is less than that of the meat or poultry. Also, the breading can serve as a carrier of spices or flavorings.

In these circumstances, however, the prior art is deficient in several respects. With accents on light and low calorie foods and dietary restrictions against fats, both the breading and the frying steps are at times unacceptable. Also, the flavored breading is just that and is not product flavoring. Furthermore, it is very difficult to provide breadings that will survive cooking, freezing and reheating cycles normal for frozen pre-cooked foods. Should the breaded foods be cooked or warmed in other ways than frying, they lose their appetizing appearance, particularly if cooked or warmed in microwave ovens, which do not naturally brown the outer surfaces.

Thus, there are not available acceptable methods of coating and flavoring meats for commercial production, and in particular for commercially producing poultry products so that they are natural in appearance and have special spices and flavors permeated into the meat instead of the outer breading crust.

Meats and poultry may be marinated to improve texture and flavor. It has been the practice to marinate meat and poultry products by tumbling in a marinade solution and to apply reduced pressure during the tumbling, as shown for example by US-A-7,766. Tumblers are currently available from many manufacturers for use in the meat industry. Other examples of marinating equipment for meat and poultry include US-A-3,928,634, taken as the closest prior art, US-A-4,012,808, and US-A-4,265,766. The marination of hams and larger meat portions has been enhanced by the injection of marinade before pickling in a marinade solution as set forth in in US-A-4,038,426.

However, there is a deficiency in the prior art relating to the quality control of marinated meat products. Thus, because of varying portions, sizes of products, pressures, tumbler speeds, processing times, etc., it is extremely difficult to get a product consistently marinated the same way with every batch, resulting in different tastes and textures. This is particularly true when each product must be separately injected with marinade, since the percentages of marinade absorbed by the meat cannot be held constant for different size and/or shapes of the meat products.

Commercial methods need be susceptible of mass production simply, fast, at low cost, and with unskilled labor. Also, simplified capital production equipment is a significant requirement, both because of cost and maintenance. Typical tumbling equipment used in methods for flavoring and coating meat products is set forth in U S-A-7,766 showing a simple tumbler and in U S-A-3,595,680 showing a more complex tumbler. The complex equipment may have large down time gaps for servicing either routine cleaning and maintenance of for catastrophic failure. Furthermore, critical timing and operational procedures readily vary product quality, and may require careful and skillful attention by skilled labor.

Accordingly, it is an objective of this invention to improve the state of the art in commercial production of meat and poultry products by resolving the foregoing deficiencies.

A more specific objective of this invention is to provide improved quality control and consistency in the flavor and appearance of poultry products.

Other objects, features and advantages will be found throughout the following description, drawing and claims.

## Disclosure of the Invention

A method according to the invention is characterized in that the poultry parts are marinated in a quantity of marinade until the marinade is substantially absorbed into the parts and the outer surfaces of the parts are coated with an adhesive myosin muscle protein binder coating; and that the parts are coated with a coating mixture having dry powdered ingredients including sugar so as to combine the dry coating mixture with the binder coating and form therewith a non-breaded outer glazing coat.

Thus, in accordance with this invention, there is provided a method of coating meats such as poultry parts with coatings that enhance the flavor and appearance of the parts without requiring frying. In particular, the method provides high quality appetizing frozen, pre-cooked, ready to heat and eat poultry parts. The resulting coating is a thin glaze of a desired color similar to that of roasted poultry, for example, devoid of breading and fats, yet containing and sealing thereunder special spices and flavorings that flavor the poultry itself without confinement in just the breading.

These results are obtained by including sugar solids in a thin coating placed on raw meat portions and baking it in place as a glaze coating in an oven hot enough to color the coating to a natural roasted appearance. The coating adheres firmly for subsequent freezing and reheating steps.

Equipment for the coating process comprises simply a rotary tumbler, preferably with a vacuum pump, into which the product with a moist adhesive layer is resident for tumbling with a coating mix having dry powdered ingredients including spices that are soluble in the moist adhesive layer. In part flavoring is interspersed throughout the meat portion by marinating in the tumbler before the coating step. The resulting massaging brings out the natural myosin proteins to the surface of the meat, particularly when further tumbled in the presence of sub-atmospheric pressures, thereafter to be sealed in place by glazing the coating in a hot dry heat oven. The coating mixture therefore contributes both a predominant outer coloring and predominant flavoring desirable for any particular product line.

A particularly critical step of this coating process is the provision of a significant percentage of sugar solids in the dry powder mix applied to the raw meat surface, thus producing when baked at high temperature dry heat a natural looking roast meat coloring which is retained during subsequent freezing and reheating cycles.

The method of quality control of meat and poultry parts as provided by this invention provides for tumbling batches of products of substantially similar sizes and shapes, such as chicken breast portions, in the presence of a controlled amount of additives. Thus, for a marination step they are marinated in a measured amount of marinade in a rotating tumbler with an air space at pressure reduced from atmospheric. The tumbler is rotated at such speeds that the meat parts are carried out of the marinade into the reduced pressure air and separated from the other parts so that the entire surface of all products is exposed to the reduced pressure air to condition the products for absorbing the marinade uniformly. Then when dropped back into the marinade they absorb it uniformly. This procedure is repeated for a number of tumbling cycles. Preferably the parts are raw unseasoned meat portions of size to be served in individual meal entrees, so that tumbling can be completed in a few minutes.

The products, thus conditioned to absorb the marinade, will not be subject to spotty or local absorption centers, but will uniformly absorb the marinade over their entire surfaces. However, the amount of marinade absorbed is still variable depending upon many factors such as meat texture and moisture, time of rotation, temperature, pressure, etc., all of which can change from batch to batch. It is preferable for tenderization to marinate uncooked poultry or meat products. The present invention will assure that batches of similarly sized meat portions marinated will have uniform marination, even should the moisture content, texture or shape of the portions change considerably from batch to batch.

This is achieved simply and reliably by metering out predetermined amounts of marinade into the tumbler for the batch of meat products, such as 10 % by weight, and tumbling under the above described conditions until substantially all the marinade is absorbed into the products.

In accordance with this invention a variety of differently flavored product lines may be produced by simply varying the coating mix spices and flavorings. Ethnic flavorings such as hot Mexican, Oriental Teri-Yaki, Indonesian Curry, etc. are exemplary.

This process is particularly suitable for preparation of portion sized frozen pre-cooked meat entrees, ready to heat and eat. Thus, poultry parts of uniform size and shape, such as breasts or wing joints, may be very quickly and economically processed in simple equipment with consistent results that will assure the same taste, appearance and quality from batch to batch, even when many manufacturing variables are encountered such as variations in temperature, moisture, size, shape, fat and presence of skin, etc.

**Brief Description of the Drawings**

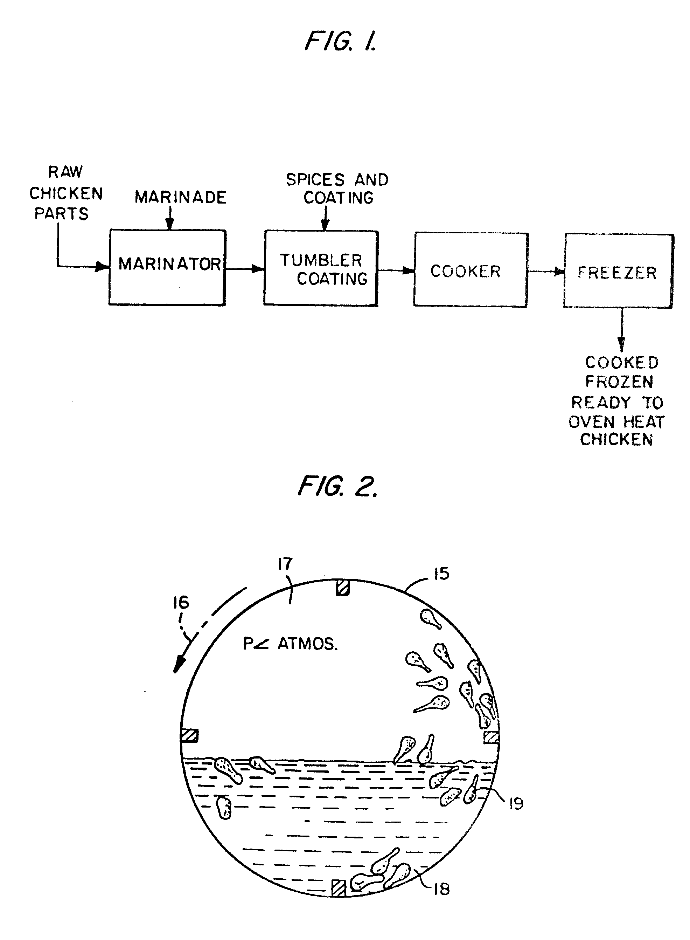

In the drawings Fig. 1 is a block diagram of the poultry processing system afforded by this invention and Fig. 2 is a diagrammatic end section view of a rotating tumbler drum for marinating and coating meat products in accordance with the teacings of this invention.

**The Preferred Embodiment**

As may be seen from the drawing, Fig. 2 shows the simple rotating drum tumbler used in the marinating and coating steps shown in Fig. 1. Thus, in the marinating step the tumbler drum 15 of about one meter diameter rotates as indicated by arrow 16 at about two revolutions per minute with a marinade 18 therein and a batch of meat products, such as chicken portions 19. The drum is partly filled to leave an air space 17 thereabove, which is evacuated to a pressure below atmospheric when the drum is rotated to marinate a batch of meat products, which are typically meal sized portions.

The internal drum pressure is important, since the meat portions to be marinated come from the atmosphere and thus contain air in the capillaries and tissues which can block the quick entry of the marinade. Thus, typically a pressure below atmospheric such as 0.6 to 0.8 Bar is maintained in the tumbler when the marinating is taking place, thereby to remove the air from the meat products, letting it be replaced quickly by absorbed marinade. Thus, as seen from the drawing, the poultry pieces 19 are rotated out of residence in the marinade and are allowed to fall through the reduced pressure air portion so that their whole surface is exposed before being reintroduced into the marinade. This takes place over several cycles. The drum rotation therefore is such that the parts 19 are not held by centrifugal force against the outer wall, but will be pulled off by gravity as they near the top of their travel path. Otherwise, closely packed parts 19 are not held by centrifual force against the outer wall, but will be pulled off by gravity as they near the top of their travel path. Otherwise, closely packed parts 19 would tend to have only the outermost exposed local regions exposed to the reduced pressure atmosphere and thus would not tend to be uniformly penetrated by the marinade.

As hereinbefore explained, it is desirable to have every part and every batch uniform for quality control purposes. To overcome all the possible variations encountered such as moisture content of the meat, pressure from batch to batch, different meat textures, etc,. it has been found by this invention that the uniformity is very simply controlled by metering out the amount of meat in each batch and the marinade, to control the amount of materials in the tumbler. Then the materials are tumbled until the entire amount of marinade is absorbed by the meat. Thus, whatever the variables, the amount of absorbed marinade per kg of meat remains constant.

In a typical example, 45.5 kg. of raw chicken breasts or wing joints and 4.5 kg of marinade were rotated at two revolutions per minute in a one meter diameter drum for between six and twenty-five minutes until all the marinade was absorbed. The chicken parts then weighed 50 kg., and the meat moisture content was substantially uniform throughout. The barometric pressure was 0.7 Bar during the rotation.

The marinade solution may vary, of course, to give appropriate flavor or tenderness, etc.

For the coating step of Fig. 1, the same simple drum may be used after the marinade is all absorbed, by adding the spices and coating mixture. The massaging action of the marinating process effected in this matter, as taught by the above mentioned U S-A-4,038,426, results in the coating of the meat with a congealed layer of viscous protein. This constitutes a preferred adhesive coating on the poultry parts being processed by this invention. Thus, when a dry powdered mixture of spices, flavoring and coating ingredients is added and the chicken parts tumbled for a few minutes, a uniformly disposed coating layer adheres to the outer surface of the product. In order to cause some penetration, as in the marinating step, of the spices and flavoring into the body of the chicken parts, preferably the tumbler is evacuated to a pressure slightly less than atmospheric, such as 0.8 Bar.

The coating mix contains dextrose and sugar solids to constitute the primary coating constituents, the remainder being flavoring and spices. This is devoid of any fats and starches for dietary purposes. Even more significant, these ingredients with the protein produce a glaze coating when cooked in the next step shown in Fig. 1. This glaze coating elastically covers the surface and seals in the spices and flavoring and firmly adheres during subsequent freezing and reheating cycles. It is preferably heated by baking for about ten to twenty minutes in a dry oven at high temperature, such as 250°C, while the raw chicken is cooked. With this sugar solid content, the glaze coating is very thin and is thus browned until it establishes the predominant color of the chicken to be similar to roast chicken, providing a highly attractive and appetizing appearance. Thus, preferably the sugar solid content of the coating mix is in the order of 25% by weight, with the remainder, dextrose, flavoring and preserving ingredients.

Several kinds of product lines of different featured flavors can readily be established in this manner. Thus consider the following examples:

For an Oriental Teri-Yaki line, soy sauce powder, onion and garlic powder may constitute typical ingredients.

For a hot Mexican flavoring, hot pepper powders and paprika may be used.

For Indonesian flavoring, curry powder may constitute the main flavoring ingredient.

Citric acid, lime or lemon flavoring may be used. Not all ingredients need be powdered, but since the myosin protein adhesive coatings are water soluble, it is preferable to use dry powder mix ingredients to prevent dilution or loss of the adhesive and key coating constituent.

Cheeses may be used for Italian flavoring ingredients.

Other lines may use sour cream powder, tomato powder, celery salt or proprietary spice mixtures.

Since the weight of the chicken parts (50 kg.) following the marination step is known, it is again a simple step to assure uniformity of flavoring by simply metering out a predetermined amount of a premixed additive powder mix. No variations of the product or processing (temperature, time, pressure, etc.) cause differences in flavor quality. Other moist adhesive coatings could be applied without the marinating step, if desired, as a base for the coating mixture.

This coating afforded by the invention, therefore has not only distinctive advantages of quality control and cosmetic beauty, but also is securely adhered in place to ruggedly withstand freezing, storage in frozen state and reheating. In particular, the products may be reheated to serving temperature in microwave ovens, and still have the appearance of roasted chicken. The appearance is particularly good for chicken products, and those having skin thereon, but also provides for other meats a natural and appetizing browned appearance with microwave warm up.

It is to be recognized that various flavorings and glazing mixtures may be employed. Similarly the product is preferably pre-marinated, particularly in the case of tough meats or dry chicken breasts, and various marinades may be used for tenderizing and flavoring. It is essential for quality control however, that the amounts of marinade and flavorings be precisely controlled for any product line or flavor, so that the internal meat is uniformly marinated.

The amount of marinade is precisely controlled by metering out the exact quantity desired, such as 10% by weight, into a rotating tumbler, and tumbling until the liquid marinade is completely absorbed into the products, leaving the surface sticky with the myosin proteins generated by the tumbling. Then a new tumbling cycle is started with a precisely measured quantity of additive spices and flavorings in the binding protein-sugar solid glazing layer base material, so that the additives may be uniformly rubbed over the entire product surface and be impregnated into the surface layer of the product. This raw glazing layer is then cooked with the product in a dry oven atmosphere, to bake in place, where it becomes more impermeable, thereby to seal in the marinade liquid so that it is more difficult to dehydrate in the freezing process and the storage in the frozen state.

The following examples provide preferred preparation steps for the products, in exemplary flavors, for explicit product lines. Variations including the addition of flavorings such as soy sauce in paste or liquid form rather than in powder form to the glazing mixture are of course possible. It is essential however to substantially eliminate the starches, flours and oils from the glazing layer, a step which departs in spirit and principal from the prior art attempting to provide acceptable appearance by a breaded surface coating of a meat product.

## EXAMPLE 1

To provide an oriental or teriyaki flavored chicken portion, the primary ingredients for the glazing mixture in dry powder form are dextrose, corn syrup solids, soy sauce powder, spices and the natural myosin proteins above described.

## EXAMPLE 2

Curry powder may be substituted in the mixture of Example 1 for the soy sauce powder. Other such substitute flavors and spices may be used as desired, including cheeses, peppers, garlic or onion salts, etc.

## EXAMPLE 3

As above, wherein the products are impregnated by 10% by weight of a liquid marinade solution, by metering product and marinade weight into a rotating tumbler and tumbling until all the marinade is absorbed into the products.

## EXAMPLE 4

As above described, with the meat product cooked in a baking oven at a temperature of about 250ºC for from eight to twenty minutes, or until the glazing coating attains the desired final coloring.

## EXAMPLE 5

Same as Example 4 wherein the products are chicken parts and the final coloring simulates the golden brown of roasted chicken.

## EXAMPLE 6

Same as Example 4, wherein the products are frozen and stored in frozen state until ready to serve, and are then warmed to serving temperature in a micro-wave oven. They resemble roasted chicken in color, appearance and taste.

## EXAMPLE 7

Same as Example 6, except warming in deep fat. The product has similar color, appearance and taste, but has a thin oil layer which adds calories.

It is therefore evident that this invention provides a novel and superior product line affording dietary characteristics, high quality control of flavoring and preparation, a variety of product characteristics for differing product themes and lines, excellent appearance and flavor, and better preservation in the frozen state.

It is further clear therefore that this invention provides a readily reproductible product quality that may be maintained under all kinds of unusual processing conditions without experienced or skilled labor and with simple processing equipment comprising a mixer such as a rotating tumbler. Therefore the state of the art is advanced. Accordingly, those novel features are defined in the following claims.

**Claims**

1. A method of processing raw poultry parts, **characterized** in

that the parts are marinated in a quantity of marinade until the marinade is substantially absorbed into the parts and the outer surfaces of the parts are coated with an adhesive myosin muscle protein binder coating; and

that the parts are coated with a coating mixture having dry powdered ingredients including sugar so as to combine the dry coating mixture with the binder coating and form therewith a non-breaded outer glazing coat.

2. A method according to claim 1, **characterized** in that the marinating includes the following steps:

introducing the quantity of marinade into a drum; and

tumbling the parts with the marinade in the drum until the marinade is substantially absorbed into the parts and the outer surface of each part has the binder coating disposed thereon.

3. A method according to claim 1, **characterized** in that a quantity of dry sugar is provided as a component of the dry coating mixture and that the sugar browns upon heating.

4. A method according to claim 1, **characterized** in that a quantity of dry sugar solids and flavoring agents are provided as a component of the dry coating mixture and that the coating mixture is combined with the binder coating.

5. A method according to claim 1, **characterized** in that the coating includes the step of tumbling the myosin protein coated parts in the presence of the dry mixture so as to produce rubbed parts and so as to form with the binder coating and the mixture an outer glazing coat on the outer surface of each part, the glazing coat browning upon cooking to form a glazed coating.

6. A method according to claim 1, **characterized** in that the dry coating mixture is combined with the myosin protein, the dry coating mixture including sugar solids and flavoring agents.

7. A method according to claim 6, **characterized** in that the myosin protein coated parts are coated with the coating mixture to thereby form with the protein layer and the mixture an adherent glazing coat on the outer surfaces of the parts, the glazing coat browning upon cooking to form a glazed coating.

8. A method according to claim 1, **characterized** in that the parts are rubbed together in the quantity of marinade until the marinade is substantially absorbed into the parts.

9. A method according to claim 1, **characterized** in that the parts are coated with a dry binder coating mixture including a proportion of sugar solids and a proportion of spices and flavoring agents so as to combine the mixture with the mysoin protein binder coating and to form therewith an outer glazing coat, the mixture serving to create a generally uniform color upon cooking.

10. A method according to claim 1, **characterized** in that the coated parts are cooked so as to seal the glazing coat in place to form a glazed coat which retains the marinade within the parts.

11. A method according to claim 1, **characterized** in

that raw poultry parts are tumbled in an amount of marinade until the marinade is substantially absorbed by the parts and the surface of the parts develops an adhesive binder layer of myosin muscle protein; and

that the moist parts are tumbled in contact with a dry coating mixture of powdered flavoring materials, which materials dissolve and continue with the binder layer, which mixture includes a proportion of sugar solids and of dextrose and a proportion of spices and flavoring agents and forms with the binder layer an outer sealing layer of glazing substance.

12. A method according to claim 11, **characterized** in that the glazed coating is formed by cooking the parts coated with the sealing layer.

13. A method according to claim 1, **characterized** in

that on the outer surface of the raw parts is provided a thin, uniformly disposed edible protein adhesive binder coating by marinating; and

that the coating is contacted by rubbing and filling with a non-breaded dry coating mixture including sugar, spices, and flavoring agents to form a thin, colored, firmly adherent outer glazing coat, the coating mixture creating a generally uniform color upon cooking.

14. A marinated coated and cooked poultry product, **characterized** by a poultry meat body impregnated with liquid marinade and having an outer surface, which is provided with an outer glazing coat, comprising a moist adhesive binder layer at least partially combined with a dry coating mixture, the glazing coat upon cooking forming a non-breaded colored glazed layer sealing the impregnated liquid marinade within the poultry meat body.

15. A product according to claim 14, **characterized** in that the dry coating mixture includes sugar.

16. A product according to claim 14, **characterized** in that the dry coating mixture includes sugars and spices.

17. A product according to claim 14, **characterized** in that the glazing layer has an unbreaded outer surface and has a high percentage of myosin proteins and dry sugar solids, spices and flavorings.

18. A product according to claim 14, **characterized** in that it is a low calorie, low starch and low fat poultry product prepared from poultry parts for freezing in a precooked state for preservation and to be fast served by heating to attain an appetizing predetermined outer surface appearance and color, resembling roasted chicken.

19. A product according to claim 14, **characterized** in that the outer glazing layer is substantially uniformly distributed on the meat body outer surface and is baked on in contact with the outer surface, the glazing layer comprising a mixture of myosin protein and dry sugar solids and flavorings.

**Revendications**

1. Procédé de traitement de morceaux crus de volaille, caractérisé :

en ce qu'on fait mariner les morceaux dans une certaine quantité de marinade jusqu'à ce que cette dernière soit pratiquement absorbée dans les morceaux et on enrobe les surfaces extérieures des morceaux au moyen d'un enrobage de protéines musculaires de myosine formant un liant, qui adhère et

en ce qu'on enrobe les morceaux d'un mélange de revêtement comprenant des ingrédients secs et en poudre, parmi lesquels du sucre, de façon à faire se combiner le mélange sec de revêtement avec l'enrobage formant liant, en formant ainsi une couche extérieure de vernis, non panée.

2. Procédé suivant la revendication 1, caractérisé en ce que le marinage comprend les opérations suivantes :

introduire la quantité de marinade dans un tambour et

retourner les morceaux avec la marinade dans le tambour jusqu'à ce que la marinade soit pratiquement absorbée dans les morceaux et que l'enrobage formant liant soit disposé sur la surface extérieure de chaque morceau.

3. Procédé suivant la revendication 1, caractérisé en ce qu'une certaine quantité de sucre sec est prévue en tant que composant du mélange sec de revêtement et en ce que le sucre brunit par chauffage.

4. Procédé suivant la revendication 1, caractérisé en ce qu'une certaine quantité de matière solide à base de sucre sec et une certaine quantité d'agents aromatisants sont prévues en tant que composants du mélange sec de revêtement et en ce que le mélange de revêtement est combiné à l'enrobage formant liant.

5. Procédé suivant la revendication 1, caractérisé en ce que l'enrobage comprend l'opération consistant à faire passer au tambour de retournement, en présence du mélange sec, les morceaux enrobés de protéines de myosine, de façon à produire des morceaux frottés et de façon à former avec l'enrobage formant liant et le mélange une couche extérieure de vernissage sur la surface extérieure de chaque morceau, la couche de vernissage brunissant à la cuisson de façon à former une couche vernie.

6. Procédé suivant la revendication 1, caractérisé en ce que le mélange sec de revêtement est combiné aux protéines de myosine, ce mélange sec de revêtement comprenant des matières solides à base de sucre et des agents aromatisants.

7. Procédé suivant la revendication 6, caractérisé en ce que les morceaux enrobés de protéines de myosine sont recouverts d'un mélange de revêtement, de façon à former avec la couche de protéines et le mélange une couche de vernissage qui adhère sur les surfaces extérieures des morceaux, la couche de vernissage brunissant à la cuisson de façon à former un revêtement de vernissage.

8. Procédé suivant la revendication 1, caractérisé en ce que les morceaux sont frottés entre eux dans la quantité prévue de marinade jusqu'à ce que la marinade soit pratiquement absorbée dans les morceaux.

9. Procédé suivant la revendication 1, caractérisé en ce que les morceaux sont recouverts d'un mélange de revêtement sec formant liant, comprenant une certaine proportion de matières solides à base de sucre et une certaine proportion d'épices et d'agents aromatisants, de façon à faire se combiner le mélange avec l'enrobage formant liant à base de protéines de myosine et à former avec ce dernier une couche extérieure de vernissage, le mélange servant à créer une coloration sensiblement uniforme à la cuisson.

10. Procédé suivant la revendication 1, caractérisé en ce qu'on fait cuire les morceaux revêtus, de façon à maintenir en place la couche de vernissage afin de former une couche vernie qui retient la marinade à l'intérieur des morceaux.

11. Procédé suivant la revendication 1, caractérisé :

en ce qu'on fait passer les morceaux crus de volaille au tambour de retournement, dans une certaine quantité de marinade, jusqu'à ce que la marinade soit pratiquement absorbée par les morceaux et que la surface des morceaux fasse apparaître une couche de protéines musculaires de myosine formant un liant qui adhère

et en ce qu'on fait passer les morceaux humides au tambour de retournement, en contact avec un mélange sec de revêtement formé de matières aromatisantes en poudre, lesquelles matières se dissolvent et se combinent avec la couche de liant, le mélange comprenant une certaine proportion de matières solides à base de sucre, et de dextrose, et une certaine proportion d'épices et d'agents aromatisants et formant avec la couche de liant une couche extérieure étanche de substance de vernissage.

12. Procédé suivant la revendication 11, caractérisé en ce que l'enrobage de vernissage est formé en faisant cuire les morceaux revêtus de la couche étanche.

13. Procédé suivant la revendication 1, caractérisé :

en ce que, sur la surface extérieure des morceaux crus, il est prévu, par marinage, un enrobage de liant à base de protéines alimentaires, mince et disposé d'une manière uniforme, qui adhère

et en ce qu'on provoque un contact avec le revêtement, par frottage et par remplissage au moyen d'un mélange sec de revêtement, non pané, comprenant du sucre, des épices et des agents aromatisants, de façon à former une couche extérieure de vernissage, mince et colorée, qui adhère fermement, le mélange de revêtement créant une couleur sensiblement uniforme à la cuisson.

14. Produit à base de volaille, mariné, enrobé et cuit, caractérisé en ce qu'une masse de chair de volaille est imprégnée d'une marinade liquide et a une surface extérieure qui est pourvue d'une couche extérieure de vernissage, comprenant une couche de liant humide qui adhère, combinée au moins partiellement avec un mélange sec de revêtement, la couche de vernissage formant à la cuisson une couche vernie colorée, non panée, qui enferme la marinade liquide, introduite par imprégnation, dans la masse de chair de volaille.

15. Produit suivant la revendication 14, caractérisé en ce que le mélange sec de revêtement comprend du sucre.

16. Produit suivant la revendication 14, caractérisé en ce que le mélange sec de revêtement comprend du sucre et des épices.

17. Produit suivant la revendication 14, caractérisé en ce que la couche de vernissage comporte une surface extérieure non panée et comprend un pourcentage élevé de protéines de myosine et des matières solides à base de sucre sec, des épices et des agents aromatisants.

18. Produit suivant la revendication 14, caractérisé en ce qu'il s'agit d'un produit à base de volaille, à faible nombre de calories, à faible teneur en amidon et faible teneur en matières grasses, préparé à partir de morceaux de volaille, en vue d'une congélation à l'état précuit pour leur conservation et en vue d'un service rapide par chauffage permettant d'obtenir un aspect et une couleur préfixés de la surface extérieure qui soient appétissants, ressemblant à ceux du poulet rôti.

19. Produit suivant la revendication 14, caractérisé en ce que la couche extérieure de vernissage est répartie d'une manière pratiquement uniforme sur la surface extérieure de la masse de chair et est cuite alors qu'elle est en contact avec la surface extérieure, la couche de vernissage comprenant un mélange de protéines de myosine, de matières solides à base de sucre sec et des agents aromatisants.

**Patentansprüche**

1. Verfahren zur Behandlung von rohen Geflügelteilen, **dadurch gekennzeichnet, daß** die Teile in einer Marinadenmenge mariniert werden, bis die Marinade im wesentlichen in die Teile eingedrungen ist und die Außenflächen der Teile mit einem klebrigen Myosin-Muskeleiweiß-Bindemittelbelag überzogen ist und daß die Teile mit einer trockenen, gepulverte Bestandteile einschließlich Zucker enthaltenden Belagmischung beschichtet werden, um so die trockene Belagmischung mit dem Bindemittelbelag zu kombinieren und mit diesem eine nicht panierte äußere Glasurschicht zu bilden.

2. Verfahren nach Anspruch 1, **dadurch gekennzeichnet, daß** die Marinierung folgende Schritte umfaßt:
Einbringen der Marinadenmenge in eine Trommel und Umwälzen der Teile mit der Marinade in der Trommel, bis die Marinade im wesentlichen in die Teile eingedrungen ist und die Außenfläche jedes Teiles mit dem Bindemittelbelag versehen ist.

3. Verfahren nach Anspruch 1**, dadurch gekennzeichnet, daß** eine Menge an trockenem Zucker als Bestandteil des trockenen Beschichtungsbelages vorgesehen ist und daß der Zucker bei Erhitzung bräunt.

4. Verfahren nach Anspruch 1, **dadurch gekennzeichnet, daß** eine Menge an trockenen Zuckerfestkörpern und Geschmacksstoffe als Komponenten des trockenen Beschichtungsbelages vorgesehen sind und daß die Belagmischung mit dem Bindemittelbelag kombiniert wird.

5. Verfahren nach Anspruch 1, **dadurch gekennzeichnet, daß** die Beschichtung den Schritt des Umwälzens der mit Myosin-Eiweiß beschichteten Teile in Anwesenheit der trockenen Mischung enthält, um so eingeriebene Teile zu erzeugen und um mit dem Bindemittelbelag und der Mischung auf der Oberfläche jedes Teiles eine Glasurschicht zu bilden, wobei die Glasurschicht beim Backen bräunt, um einen Glanzbelag zu bilden.

6. Verfahren nach Anspruch 1, **dadurch gekennzeichnet, daß** die trockene Belagmischung mit dem Myosin-Eiweiß kombiniert wird, wobei die trockene Belagmischung Zucker-Festkörper und Geschmacksstoffe enthält.

7. Verfahren nach Anspruch 7, **dadurch gekennzeichnet, daß** die mit Myosin-Eiweiß beschichteten Teile mit der Belagmischung beschichtet werden, um dadurch mit der Eiweißschicht und der Mischung auf den Außenflächen der Teile eine Glasurschicht zu bilden, die beim Backen bräunt und einen Glanzbelag bildet.

8. Verfahren nach Anspruch 1, **dadurch gekennzeichnet, daß** die Teile in der Marinadenmenge aneinander gerieben werden, bis die Marinade im wesentlichen in die Teile eingezogen ist.

9. Verfahren nach Anspruch 1, **dadurch gekennzeichnet, daß** die Teile mit einer einen Anteil an Zuckerfestkörpern und Geschmacksstoffen enthaltenden trockenen Bindemittelbelagmischung beschichtet werden, um die Mischung mit dem Myosin-Eiweißbindemittelbelag zu kombinieren und damit eine äußere Glasurschicht zu bilden, wobei die Mischung dazu dient, beim Backen eine allgemein gleichmäßige Farbe zu erzeugen.

10. Verfahren nach Anspruch 1, **dadurch gekennzeichnet, daß** die beschichteten Teile gebakken werden, um die Glasurschicht am Platz zu versiegeln, um eine Glanzschicht zu bilden, die die Marinade in den Teilen zurückhält.

11. Verfahren nach Anspruch 1, **dadurch gekennzeichnet, daß** die rohen Geflügelteile in einer Menge an Marinade umgewälzt werden, bis die Marinade im wesentlichen in die Teile eingedrungen ist und die Oberfläche der Teile eine klebrige Bindemittelschicht aus Myosin-Muskeleiweiß aufweist und daß die feuchten Teile in Berührung mit einer trockenen Belagmischung aus gepulverten Geschmacksstoffen umgewälzt werden, wobei sich diese Materialien auflösen und sich mit dem Bindemittelbelag kombinieren, wobei diese Mischung einen Anteil an Zuckerfestkörpern und Dextrose sowie einen Anteil an Gewürzen und Geschmacksstoffen enthält und mit der Bindemittelschicht eine äußere Dichtungsschicht aus Glasursubstanz bildet.

12. Verfahren nach Anspruch 11, **dadurch gekennzeichnet, daß** der Glasurbelag durch backen der mit der Dichtungsschicht überzogenen Teile gebildet wird.

13. Verfahren nach Anspruch 1, **dadurch gekennzeichnet, daß** auf der Außenfläche der rohen Teile durch Marinierung ein dünner, gleichförmig angeordneter, eßbarer klebriger Eiweiß-Bindemittelbelag vorgesehen ist und daß der Belag durch Reibung und Einfüllen mit einer nicht panierten trockenen, Zucker, Gewürze und Geschmacksstoffe enthaltenden Belagmischung in Berührung gebracht wird, um eine dünne, gefärbte, fest anhaftende äußere Glasurschicht zu bilden, wobei die Belagmischung beim Backen eine allgemein gleichförmige Farbe erzeugt.

14. Mariniertes, beschichtetes und gebackenes Geflügelprodukt, **gekennzeichnet durch** einen mit flüssiger Marinade imprägnierten Geflügelfleischkörper, dessen Außenfläche mit einer äußeren Glasurschicht versehen ist, die eine feuchte, klebrige Bindemittelschicht enthält, die zumindest teilweise mit einer trockenen Belagmischung kombiniert ist, wobei die Glasurschicht beim Backen eine nicht panierte farbige Glasurschicht bildet, welche die imprägnierte flüssige Marinade in dem Geflügelfleischkörper versiegelt.

15. Produkt nach Anspruch 14, **dadurch gekennzeichnet, daß** die trockene Belagmischung Zucker enthält.

16. Produkt nach Anspruch 14, **dadurch gekennzeichnet, daß** die trockene Belagmischung Zucker und Gewürze enthält.

17. Produkt nach Anspruch 14, **dadurch gekennzeichnet, daß** die Glasurschicht eine nicht panierte Außenfläche aufweist und einen hohen Prozentsatz an Myosin-Eiweißen und trockenen Zuckerfestkörpern, Gewürzen und Geschmacksstoffen enthält.

18. Produkt nach Anspruch 14, **dadurch gekennzeichnet, daß** es ein aus Geflügelteilen hergestelltes, kalorienarmes, stärkearmes und fettarmes Geflügelprodukt zum Einfrieren in einem vorgebackenen Zustand zur Konservierung ist, das durch Erhitzung schnell servierbar ist und dabei ein appetitliches vorbestimmtes Aussehen und eine entsprechende Farbe der Außenfläche ähnlich gebratenen Hähnchen erhält.

19. Produkt nach Anspruch 14, **dadurch gekennzeichnet, daß** die äußere Glasurschicht im wesentlichen gleichmäßig auf der Außenfläche des Fleischkörpers verteilt ist und in Berührung mit der Außenfläche aufgebacken ist, wobei die Glasurschicht eine Mischung aus Myosin- Eiweiß, trockenen Zuckerfestkörpern und Geschmacksstoffe enthält.

## FIG. 1.

RAW CHICKEN PARTS

MARINADE

SPICES AND COATING

| MARINATOR | → | TUMBLER COATING | → | COOKER | → | FREEZER |

COOKED FROZEN READY TO OVEN HEAT CHICKEN

## FIG. 2.

P∠ ATMOS.